# EUROPÄISCHE PATENTSCHRIFT

(11) **EP 3 300 995 B1**
(45) Veröffentlichungstag und Bekanntmachung des Hinweises auf die Patenterteilung: **06.11.2019**
(21) Anmeldenummer: 17189565.9
(22) Anmeldetag: 06.09.2017
(51) Int. Cl.: B62D 35/00, B60K 11/08, B60K 11/06, B62D 35/02

(54) **KRAFTFAHRZEUG-UNTERBODENVERKLEIDUNG MIT LUFTEINLASS**
MOTOR VEHICLE UNDERBODY CLADDING WITH AIR INLET
REVÊTEMENT DE DESSOUS DE CAISSE DU VÉHICULE AUTOMOBILE DOTÉ DE L'ENTRÉE D'AIRE

(30) Priorität: 30.09.2016 DE 102016219036
(43) Veröffentlichungstag der Anmeldung: 04.04.2018
(73) Patentinhaber: Ford Global Technologies, LLC, Dearborn, MI 48126 (US)
(72) Erfinder: Nitsche, Thomas, 41464 Neuss (DE); Fontana, Alberto, 50672 Köln (DE)
(74) Vertreter: Dörfler, Thomas

(56) Entgegenhaltungen:
- DE-A1- 4 102 073
- DE-A1- 19 952 782
- DE-A1-102007 045 057
- DE-A1-102014 118 631
- DE-T2-602005 000 699

## Beschreibung

Die Erfindung betrifft eine Kraftfahrzeug-Unterbodenverkleidung mit einem Lufteinlass, der zum Fahrzeug bzw. zur Fahrbahn hin durch ein oberes bzw. ein unteres flächiges Element abgegrenzt wird, die sich jeweils bogenförmig nach hinten und oben in Richtung auf einen Fahrzeugraum erstrecken, in dem sich zu kühlende Komponenten des Fahrzeugs befinden, gemäß dem Oberbegriff von Patentanspruch 1.

Eine derartige Unterbodenverkleidung ist aus der DE 10 2012 205 582 A1 bekannt. Diese Unterbodenverkleidung ist hier als Diffusor im Heckbereich eines Kraftfahrzeugs ausgestaltet, wobei das untere flächige Element durch eine Verkleidung des hinteren Stoßfängers gebildet wird und nicht frei endet, sondern sich in einem Bogen nach vorne krümmt.

Bei Kraftfahrzeugen mit einem Verbrennungsmotor z. B. im Frontbereich können sich vor, seitlich und insbesondere hinter dem Verbrennungsmotor Komponenten im Motorraum befinden, die von möglichst kühler Luft umströmt werden sollen, um optimal gekühlt zu werden. Diese Luft sollte kühler sein als die tendenziell wärmere Luft, die den Frontkühler und das zugehörige Gebläse durchströmt hat und dann in der Regel den übrigen Motorraum durchströmt, wobei die letztere Luft jedoch für andere Komponenten, insbesondere solche, die näher am Motor liegen, kühl genug sein kann. Allgemein kann der FESAD-Lufteinlass jedoch auch für jede andere Art der Luftzufuhr für Geräte oder Komponenten dienen, nicht nur zur Kühlung.

Um hinter dem Verbrennungsmotor liegende Komponenten, die sich im Betrieb erwärmen und nicht zu heiß werden dürfen, mit Frischluft zu kühlen, kann man einen sog. NACA-Lufteinlass vorsehen, einen strömungsgünstigen Lufteinlass in der Unterbodenverkleidung, der sich unterhalb der Ölwanne des Motors erstreckt und in den hinter dem Motor liegenden Raum mündet. Ein NACA-Lufteinlass benötigt jedoch gewisse Mindestabmessungen, insbesondere eine gewisse Länge und Höhe in Bezug auf die Fahrzeuglängsrichtung, um effizient zu arbeiten, und zugleich muss sein unterstes Teil, oft eine Gummilippe, einen gesetzlich vorgeschriebenen Mindestabstand von der Fahrbahn haben. Daher schränkt ein NACA-Lufteinlass den darüber zur Verfügung stehenden Packungsraum im Motorraum ein.

Der NACA-Lufteinlass in der o. g. DE 10 2012 205 582 A1 hat zwar eine relativ geringe Bauhöhe, doch genügt diese hier deshalb, weil nur eine unmittelbar darüber liegende Komponente zu kühlen ist, nämlich ein Endschalldämpfer, der zudem in einem von der zugeführten Frischluft durchströmten Gehäuse angeordnet ist. Damit auch weiter oben im einem Motorraum liegende Komponenten gut angeströmt werden können, müsste der NACA-Lufteinlass auch bis dahin reichen, da anderenfalls eine vorzeitige Aufspaltung der kühlen Luftströmung stattfinden würde, insbesondere durch die im Motorraum zirkulierende wärmere Luft, die den Frontkühler und das zugehörige Gebläse durchströmt hat. Konstruktionsbedingt hat der NACA-Lufteinlass eine linear schräg verlaufende Rampe mit entsprechend relativ großer Bauhöhe. Des weiteren zeigt die DE602005000699T eine Kraftfahrzeug-Unterbodenverkleidung mit einem Lufteinlass,- mit die Merkmale des Oberbegriffes von Anspruch 1.

Der Erfindung liegt die Aufgabe zu Grunde, eine Kraftfahrzeug-Unterbodenverkleidung mit einem Lufteinlass derart auszugestalten, dass der zur Verfügung stehende Packungsraum im Motorraum sowohl in der Vertikalen als auch in der Horizontalen vergrößert wird, und außerdem so, dass vor, seitlich oder hinter dem Verbrennungsmotor liegende Komponenten oder auch andere Komponenten wie z. B. ein Hinterachsdifferential optimal mit kühlender Frischluft versorgt werden. Diese Funktion sollte dabei möglichst neutral hinsichtlich schädlicher Wiederstände, wie dem Fahrzeugluftwiderstand, gewährleistet sein.

Diese Aufgabe wird durch eine Unterbodenverkleidung mit den Merkmalen des Patentanspruchs 1 gelöst.

Vorteilhafte Weiterbildungen der Erfindung sind in den abhängigen Patentansprüchen angegeben.

Mit der Erfindung wird ein verbesserter NACA-Lufteinlass bereitgestellt, ein sog. "Flat Efficient Submerged Airintake Device" (FESAD)-Lufteinlass, der weniger schräg als ein NACA-Kanal verläuft und eine geringere Bauhöhe hat.

Gemäß der Erfindung schließt sich an das hintere Ende des oberen flächigen Elements eine ebene Luftstauplatte an, die ein Stück weit im Wesentlichen vertikal nach oben verläuft und dann im Wesentlichen frei im Motorraum endet. Diese vertikal von dem oberen flächigen Element abknickende Luftstauplatte lenkt die tendenziell wärmere Luft, die das Gebläse des Frontkühlers zwischen der Ölwanne und dem oberen flächigen Element hindurchtreten lässt, von der kühleren Luftströmung durch den FESAD-Lufteinlass ab, so dass diese dadurch nicht gestört wird.

Es hat sich gezeigt, dass die Strömungstrennwirkung einer relativ kurzen ebenen Luftstauplatte, die von dem oberen flächigen Element abknickt und dann frei im Motorraum endet, praktisch ebenso gut ist wie wenn man das obere flächige Element in einem Bogen weiterführen würde, wobei es wesentlich länger sein müsste und damit in Vertikalrichtung mehr Platz im Motorraum einnehmen würde, damit die erwähnten besonders gut zu kühlenden Komponenten auch zuverlässig angeströmt werden.

Daher kann die erfindungsgemäße Unterbodenverkleidung im Ganzen oder zumindest partiell relativ flach gestaltet werden, besonders unterhalb der Komponenten im Bauraum wie z. B. eines Verbrennungsmotors im Motorraum, weshalb der Motor und der ganze Antriebsstrang bei gleich bleibender Bodenfreiheit tiefer im Fahrzeug angeordnet werden können, wie es für manche Kraftfahrzeuge erwünscht ist.

Außerdem enthält der erfindungsgemäße FESAD-Lufteinlass mehrere Wirbel erzeugende Strukturen, die den Gesamt-Strömungsquerschnitt nicht verändern, weil sie aus dünnem Blech oder dergleichen Material gefertigt sind, die jedoch intensive Wirbel erzeugen und den Gesamt-Strömungsweg, den die hindurchströmende Luft nehmen muss, etwas verlängern. Die Wirbelbildung ermöglicht es, die Bogenform insbesondere des oberen flächigen Elements besonders steil zu machen und damit die Gesamtlänge des FESAD-Lufteinlasses in der Horizontalrichtung zu vermindern.

Auf diese Weise wird der zur Verfügung stehende Packungsraum im Motorraum sowohl in der Vertikalen als auch in der Horizontalen vergrößert.

Die Wirbel erzeugenden Strukturen können mehrere Luftleitbleche sein, die sich jeweils entlang der Fahrzeughochachse und der Fahrzeuglängsrichtung im FESAD-Lufteinlass erstrecken und die quer dazu derart gekrümmt sind, dass der Gesamt-Strömungsquerschnitt in Fahrzeuglängsrichtung im Wesentlichen konstant ist.

Alternativ können die Wirbel erzeugenden Strukturen mehrere kleine FESAD-Lufteinlässe sein, die in den FESAD-Lufteinlass integriert sind.

Ähnliche Luftleitstrukturen sind zwar aus der US 4 455 045 A1 bekannt, dort jedoch zur Vermeidung von Luftstromtrennungen an der Außenseite eines Fahrzeugs und zur Verbesserung von dessen Aerodynamik. Außerdem haben die dort offenbarten Luftleitstrukturen flügelartige Querschnitte, so dass sie den effektiven Strömungsquerschnitt und damit den Durchsatz verkleinern.

In bevorzugten Ausführungsformen verläuft das obere flächige Element von einem beispielsweise in Fahrzeuglängsrichtung vor einem Verbrennungsmotor des Kraftfahrzeugs und unterhalb eines Frontkühlers liegenden vorderen Ende aus zunächst annähernd horizontal und in einem Abstand von z. B. einigen Zentimetern unter einer Ölwanne des Verbrennungsmotor hindurch und dann in einem kontinuierlich steiler werdenden Bogen zu seinem hinter der Ölwanne liegenden hinteren Ende, an das sich die Luftstauplatte anschließt.

In bevorzugten Ausführungsformen verläuft das untere flächige Element von einen in Fahrzeuglängsrichtung hinter dem hinteren Ende des oberen flächigen Elements liegenden vorderen Ende in einem wesentlich steileren Bogen als das obere flächige Element nach hinten und nach oben zu einem noch weiter hinten und wesentlich höher, z. B. um ca. 10 bis 25 Zentimeter, als das hintere Ende des oberen flächigen Elements liegenden hinteren Ende.

In bevorzugten Ausführungsformen liegt das vordere Ende des unteren flächigen Elements um eine gegebene Höhendifferenz von vorzugsweise einigen Zentimetern unterhalb des tiefsten Punkts des oberen flächigen Elements, welcher sich gewöhnlich an dessen vorderem Ende befindet.

Die ebene Luftstauplatte verläuft vorzugsweise einige Zentimeter weit im Wesentlichen vertikal nach oben bis zu ihrem freien Ende, wobei unter einigen Zentimetern hier ein Bereich von ca. 2 bis 10 Zentimeter verstanden wird.

In bevorzugten Ausführungsformen wird zumindest das obere flächige Element in Bezug auf die Fahrzeugquerrichtung von vorne nach hinten breiter.

Es folgt eine Beschreibung von Ausführungsbeispielen anhand der Zeichnungen. Darin zeigen:
- Fig. 1: eine schematische Schnittansicht eines FESAD-Lufteinlasses zum Kühlen von Komponenten im Motorraum eines Kraftfahrzeugs;
- Fig. 2: eine schematische Perspektivansicht einer ersten Bauart des FESAD-Lufteinlasses in Fig. 1; und
- Fig. 3: eine schematische Perspektivansicht einer zweiten Bauart des FESAD-Lufteinlasses in Fig. 1.

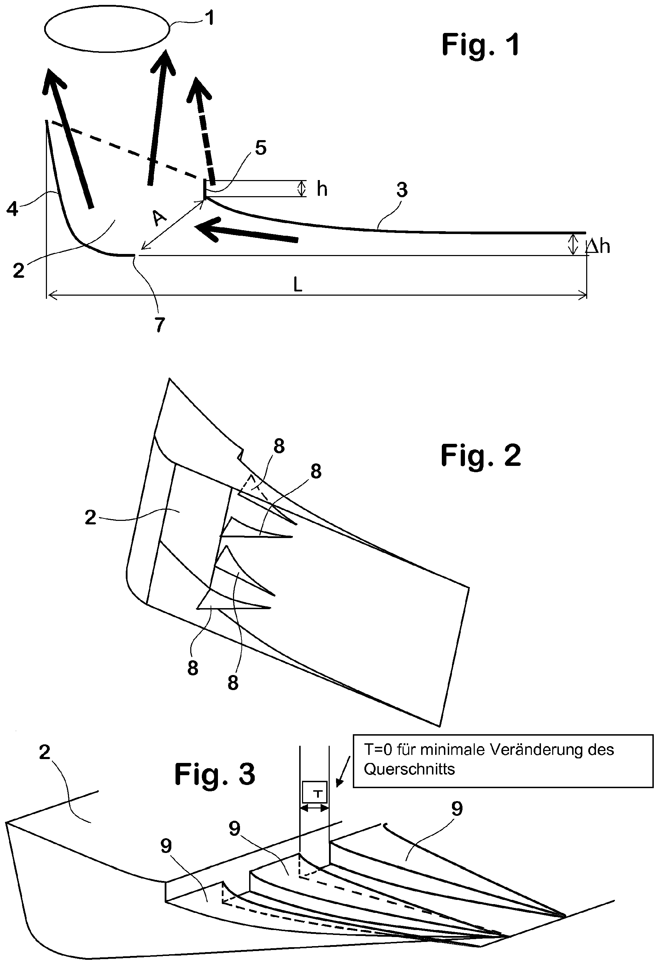

Fig. 1 zeigt beispielhaft in einem Längsschnitt durch ein Kraftfahrzeug schematisch einen Abschnitt eines vorne im Fahrzeug befindlichen Motorraums, in dem es einen elliptisch umringten Bereich 1 gibt, in dem sich eine oder mehrere Komponenten des Fahrzeugs bzw. seines Antriebs befinden, die im Betrieb warm werden und besonderer Kühlung bedürfen. Der Bereich 1 liegt in Fahrzeuglängsrichtung gesehen hinter einem nicht dargestellten Verbrennungsmotor.

Zur Kühlung der Komponenten im Bereich 1 dient ein FESAD-Lufteinlass 2, ein in einer nicht gezeigten Unterbodenverkleidung des Fahrzeugs ausgebildeter Kanal, der zum Motorraum und zum Motor hin durch ein oberes flächiges Element 3, das unterhalb eines nicht gezeigten Frontkühlers beginnt, und zur Fahrbahn hin durch ein unteres flächiges Element 4 sowie seitlich durch hier nicht gezeigte Seitenwände abgegrenzt wird. Die flächigen Elemente 3 und 4 erstrecken sich jeweils bogenförmig nach hinten und oben in Richtung auf den Bereich 1.

Während der Fahrt strömt relativ kühle Frischluft vom Unterboden in den Bereich 1, wie mit durchgezogenen Pfeilen angezeigt. Außerdem gibt es oberhalb des oberen flächigen Elements 3 einen mit einem gestrichelten Pfeil angezeigten relativ warmen Luftstrom von einem Gebläse eines Frontkühlers unter einer Ölwanne des Verbrennungsmotors hindurch, wobei sich der Verbrennungsmotor in der Figur links von dem gestrichelten Pfeil und oberhalb des oberen flächigen Elements 3 befindet.

Bei konventioneller Gestaltung des FESAD-Lufteinlasses würden sowohl das obere flächige Element als auch das untere flächige Element in kontinuierlich steiler werdenden Bögen verlaufen. Bei einer derartigen Gestaltung würde jedoch ein Teil der oberhalb des oberen flächigen Elements strömenden wärmeren Luft in den zu kühlenden Bereich 1 gerichtet und die Frischluftströmung durch den Lufteinlass 2 behindern.

Bei der in Fig. 1 gezeigten Gestaltung schließt sich an das hintere Ende des oberen flächigen Elements 3 eine ebene Luftstauplatte 5 an, die eine Strecke h weit im Wesentlichen vertikal nach oben gerichtet verläuft und dann im Wesentlichen frei im Motorraum endet, wobei h im Wesentlichen nur durch im Bauraum befindliche Komponenten begrenzt ist, so dass der Lufteinlass 2 eine zu der kühlenden Komponente gerichtete Luftaustrittsfläche hat, die in Fig. 3 mit gestrichelten Linien angezeigt ist. Die Strecke h ist durch die sich im Bauraum ergebenden Bedingungen maximal auszulegen, und der Winkel, um den die Luftaustrittsfläche des FESAD-Lufteinlasses gegenüber der Fahrzeuglängsrichtung geneigt ist, ergibt sich aus den Bauraumbedingungen und beträgt in diesem Beispiel um die 20 Grad, mit einer Variation von +10 Grad.

Die kurze vertikal abknickende Luftstauplatte 5 hat die Wirkung, dass sie den wärmeren Luftstrom eher nach oben oder seitlich ablenkt, so dass die kühleren und wärmeren Luftströme auch hinter der Luftstauplatte 5 weitgehend getrennt bleiben und der Bereich 1 ausschließlich von der kühleren Luft beaufschlagt wird, wie gewünscht.

Die beschriebene und gezeigte Gestaltung ermöglicht es, die vertikale Erstreckung des FESAD-Lufteinlasses 2 kleiner zu machen als bei einem konventionell gestalteten NACA-Lufteinlass, so dass im Motorraum Platz gewonnen wird, besonders im Bereich oberhalb des oberen flächigen Elements 3.

Wie aus Fig. 1 ersichtlich, wird ein in der Vertikalen wirksamer Öffnungsquerschnitt des Lufteinlasses 2 außer durch die vordere Breite des Lufteinlasses 2 durch ein Maß Δh bestimmt, um welches ein vorderes und unteres Ende 7 des unteren flächigen Elements 4 bzw. eine optional daran angebrachte Gummilippe tiefer liegt als das vordere und untere Ende des oberen flächigen Elements 3. Das Maß Δh kann sich z. B. in einem Bereich von einigen Millimetern bis 10 Zentimeter bewegen, wobei das Mindestmaß abhängig vom gewünschten Luftdurchsatz ist.

Ein diagonaler Öffnungsquerschnitt des Lufteinlasses 2 wird durch den Abstand A zwischen dem vorderen und unteren Ende 7 des unteren flächigen Elements 4 und der Verbindungsstelle zwischen dem oberen flächigen Element 3 und der Luftstauplatte 5 bestimmt. Der Lufteinlass 2 hat eine Gesamtlänge L.

Wie in Fig. 2 in einer schematischen Perspektivansicht veranschaulicht, können im Lufteinlass 2 mehrere bogenförmige Luftleitbleche 8 angeordnet sein, die sich jeweils entlang der Fahrzeughochachse und der Fahrzeuglängsrichtung im Lufteinlass erstrecken und die quer dazu derart gekrümmt sind, dass der Gesamt-Strömungsquerschnitt in Fahrzeuglängsrichtung konstant ist.

Alternativ können mehrere kleine NACA-Lufteinlässe 9 in den Lufteinlass 2 integriert sein, wie in Fig. 3 veranschaulicht.

Sowohl die Luftleitbleche 8 als auch die integrierten kleinen NACA-Lufteinlässe 9 stellen Strukturen dar, die den Gesamt-Strömungsquerschnitt nicht verändern. Dies gilt jedoch nur für relativ kleine NACA-Lufteinlässe, bei denen die in Fig. 3 eingezeichnete Distanz T = 0, was anzustreben ist, weil sie aus dünnem Blech oder dergleichen Material gefertigt sind, jedoch Wirbel erzeugen und den Gesamt-Strömungsweg, den die hindurchströmende Luft nehmen muss, etwas verlängern. Die Wirbelbildung ermöglicht es, die Bogenform des flächigen Elements 3 steiler zu machen und damit die Gesamtlänge des NACA-Lufteinlasses 2 zu vermindern. Außerdem hat es sich gezeigt, dass die Wirbelerzeugung bei im Wesentlichen konstant bleibendem Gesamt-Strömungsquerschnitt den Gesamtdurchsatz und damit die Kühlung der Komponenten im Bereich 1 verbessert.

## Patentansprüche

1. Kraftfahrzeug-Unterbodenverkleidung mit einem Lufteinlass (2), der zum Fahrzeug bzw. zur Fahrbahn hin durch ein oberes bzw. ein unteres flächiges Element (4; 3) abgegrenzt wird, die sich jeweils bogenförmig nach hinten und oben in Richtung auf einen Fahrzeugraum (1) erstrecken, in dem sich zu kühlende Komponenten des Fahrzeugs befinden,
**dadurch gekennzeichnet, dass**
sich an das hintere Ende des oberen flächigen Elements (3) eine ebene Luftstauplatte (5) anschließt, die ein Stück (h) weit im Wesentlichen vertikal nach oben gerichtet verläuft und dann im Wesentlichen frei in dem Fahrzeugraum (1) endet, insbesondere im Motorraum, und dass der Lufteinlass (2) Wirbel erzeugende Strukturen (8; 9) enthält.

2. Unterbodenverkleidung nach Anspruch 1,
**dadurch gekennzeichnet, dass**
die Wirbel erzeugenden Strukturen mehrere Luftleitbleche (8) sind, die sich jeweils entlang der Fahrzeughochachse und der Fahrzeuglängsrichtung im Lufteinlass (2) erstrecken und die quer dazu derart gekrümmt sind, dass der Gesamt-Strömungsquerschnitt in Fahrzeuglängsrichtung im Wesentlichen konstant ist.

3. Unterbodenverkleidung nach Anspruch 1,
**dadurch gekennzeichnet, dass**
die Wirbel erzeugenden Strukturen mehrere kleine Lufteinlässe (9) sind, die in den Lufteinlass (2) integriert sind.

4. Unterbodenverkleidung nach einem der vorhergehenden Ansprüche, **dad**
**urch gekennzeichnet**, **dass**
das obere flächige Element (3) von einem in Fahrzeuglängsrichtung insbesondere vor einem Verbrennungsmotor des Kraftfahrzeugs und unterhalb eines Frontkühlers liegenden vorderen Ende aus zunächst annähernd horizontal und in einem Abstand unter einer Ölwanne des Verbrennungsmotor hindurch und dann in einem kontinuierlich steiler werdenden Bogen zu seinem hinter der Ölwanne liegenden hinteren Ende verläuft, an das sich die Luftstauplatte (5) anschließt.

5. Unterbodenverkleidung nach einem der vorhergehenden Ansprüche, **dad**
**urch gekennzeichnet**, **dass**
das untere flächige Element (4) von einen in Fahrzeuglängsrichtung hinter dem hinteren Ende des oberen flächigen Elements (3) liegenden vorderen Ende in einem steileren Bogen als das obere flächiges Element (3) nach hinten und nach oben zu einem noch weiter hinten und wesentlich höher als das hintere Ende des oberen flächigen Elements liegenden hinteren Ende verläuft.

6. Unterbodenverkleidung nach einem der vorhergehenden Ansprüche, **dad**
**urch gekennzeichnet**, **dass**
ein vorderes Ende (7) des unteren flächigen Elements (4) um eine gegebene Höhendifferenz (Δh) unterhalb des tiefsten Punkts des oberen flächigen Elements (3) oder unterhalb von dessen vorderem Ende liegt.

7. Unterbodenverkleidung nach Anspruch 6,
**dadurch gekennzeichnet, dass**
die Höhendifferenz (Δh) bis zu einigen Zentimetern beträgt.

8. Unterbodenverkleidung nach einem der vorhergehenden Ansprüche, **dad**
**urch gekennzeichnet**, **dass**
die ebene Luftstauplatte (5) einige Zentimeter weit im Wesentlichen vertikal nach oben gerichtet bis zu ihrem freien Ende verläuft.

9. Unterbodenverkleidung nach einem der vorhergehenden Ansprüche, **dad**
**urch gekennzeichnet**, **dass**
zumindest das obere flächige Element (3) von vorne nach hinten breiter wird.

## Claims

1. Motor vehicle underbody cladding having an air inlet (2), which is delimited with respect to the vehicle or to the roadway by an upper and a lower planar element (4; 3), which each extend rearwards and upwards in a curve in the direction of a vehicle compartment (1) in which components of the vehicle that are to be cooled are located,
**characterized in that**
the rear end of the upper planar element (3) is adjoined by a level air baffle plate (5), which extends a little way (h) directed substantially vertically upwards and then ends substantially freely in the vehicle compartment (1), in particular in the engine compartment, and **in that** the air inlet (2) contains structures (8; 9) producing eddies.

2. Underbody cladding according to Claim 1,
**characterized in that**
the structures producing eddies are a plurality of air guide plates (8), which each extend along the vehicle vertical axis and the vehicle longitudinal direction in the air inlet (2) and which are curved transversely thereto in such a way that the overall flow cross section in the vehicle longitudinal direction is substantially constant.

3. Underbody cladding according to Claim 1,
**characterized in that**
the structures producing eddies are a plurality of small air inlets (9), which are integrated into the air inlet (2).

4. Underbody cladding according to one of the preceding claims,
**characterized in that**
the upper planar element (3) extends through from a front end located in the vehicle longitudinal direction, in particular in front of an internal combustion engine of the motor vehicle and underneath a front radiator, initially approximately horizontally and at a distance under an oil sump of the internal combustion engine and then in a continuously steepening curve to its rear end, which is located behind the oil sump and is adjoined by the air baffle plate (5).

5. Underbody cladding according to one of the preceding claims,
**characterized in that**
the lower planar element (4) extends rearwards from a front end located behind the rear end of the upper planar element (3) in the vehicle longitudinal direction in a steeper curve than the upper planar element (3) and upwards to a rear end, located still further back and substantially higher than the rear end of the upper planar element.

6. Underbody cladding according to one of the preceding claims,
**characterized in that**
a front end (7) of the lower planar element (4) is located by a given vertical difference (Δh) underneath the deepest point of the upper planar element (3) or underneath the front end of the latter.

7. Underbody cladding according to Claim 6,
**characterized in that**
the vertical difference (Δh) is up to a few centimetres.

8. Underbody cladding according to one of the preceding claims,
**characterized in that**
the flat air baffle plate (5) extends a few centimetres directed substantially vertically upwards as far as its free end.

9. Underbody cladding according to one of the preceding claims,
**characterized in that**
at least the upper planar element (3) becomes wider from front to back.

## Revendications

1. Garniture de bas de caisse de véhicule automobile comprenant une entrée d'air (2), délimitée en direction du véhicule ou de la chaussée par un élément supérieur ou inférieur (4 ; 3) sensiblement bidimensionnel qui s'étend de manière incurvée vers l'arrière et vers le haut en direction du compartiment de véhicule (1) dans lequel se trouvent des composants à refroidir du véhicule,
**caractérisée en ce que**
une chicane d'air plane (5) est adjacente à l'extrémité arrière de l'élément supérieur (3) sensiblement bidimensionnel, lequel déflecteur d'air s'étend légèrement (h) en étant orienté sensiblement verticalement vers le haut puis se termine sensiblement librement dans le compartiment de véhicule (1), en particulier dans le compartiment moteur et **en ce que** l'entrée d'air (2) contient des structures (8 ; 9) génératrices de tourbillons.

2. Garniture de bas de caisse selon la revendication 1,
**caractérisée en ce que**
les structures génératrices de tourbillons sont une pluralité de plaques déflectrices d'air (8) qui s'étendent chacune dans l'entrée d'air (2) le long de l'axe vertical du véhicule et dans la direction longitudinale du véhicule et qui sont incurvées transversalement à ladite entrée d'air de sorte que la section transversale d'écoulement totale est sensiblement constante dans la direction longitudinale du véhicule.

3. Garniture de bas de caisse selon la revendication 1,
**caractérisée en ce que**
les structures génératrices de tourbillons sont une pluralité de petites entrées d'air (9) qui sont intégrées dans l'entrée d'air (2).

4. Garniture de bas de caisse selon l'une des revendications précédentes,
**caractérisée en ce que**
l'élément supérieur (3) sensiblement bidimensionnel s'étend depuis une extrémité avant, qui est située en particulier devant le moteur à combustion interne du véhicule automobile et au-dessous du radiateur avant par référence à la direction longitudinale du véhicule, tout d'abord de manière approximativement horizontale et à une certaine distance au-dessous d'un carter d'huile du moteur à combustion interne puis suivant une incurvation devenant de plus en plus raide en direction de son extrémité arrière qui est située derrière le carter d'huile et qui est adjacente à la chicane d'air (5).

5. Garniture de bas de caisse selon l'une des revendications précédentes,
**caractérisée en ce que**
l'élément inférieur (4) sensiblement bidimensionnel s'étend depuis une extrémité avant, située en arrière de l'extrémité arrière de l'élément supérieur (3) sensiblement bidimensionnel par référence à la direction longitudinale du véhicule, suivant une incurvation plus raide que celle de l'élément supérieur (3) sensiblement bidimensionnel vers l'arrière et vers le haut en direction d'une extrémité arrière située encore plus en arrière et beaucoup plus haut que l'extrémité arrière de l'élément supérieur sensiblement bidimensionnel.

6. Garniture de bas de caisse selon l'une des revendications précédentes,
**caractérisée en ce que**
une extrémité avant (7) de l'élément inférieur (4) sensiblement bidimensionnel est située, d'une différence de hauteur donnée (Δh), au-dessous du point le plus bas de l'élément supérieur (3) sensiblement bidimensionnel ou au-dessous de l'extrémité avant de celui-ci.

7. Garniture de bas de caisse selon la revendication 6,
**caractérisée en ce que**
la différence de hauteur (Δh) peut atteindre quelques centimètres.

8. Garniture de bas de caisse selon l'une des revendications précédentes,
**caractérisée en ce que**
la chicane d'air plane (5) s'étend sur quelques centimètres sensiblement verticalement vers le haut jusqu'à son extrémité libre.

9. Garniture de bas de caisse selon l'une des revendications précédentes,
**caractérisée en ce que**
au moins l'élément supérieur (3) sensiblement bidimensionnel s'élargit d'avant en arrière.
